# EUROPÄISCHE PATENTANMELDUNG

(11) **EP 1 787 714 A1**
(43) Veröffentlichungstag der Anmeldung: **23.05.2007**
(21) Anmeldenummer: 05023814.6
(22) Anmeldetag: 02.11.2005
(51) Int. Cl.: B01J 8/00

(54) **Verfahren zum Fördern einer Dispersion**

(71) Anmelder: Degussa GmbH, 40474 Düsseldorf (DE)
(72) Erfinder: Nagel, Manfred, Dr., 63477 Maintal (DE); Piroth, Josef, 63875 Mespelbrunn (DE); Schäffner, Dirk, 76756 Bellheim (DE); Krebs, Norbert, 63505 Langenselbold (DE)

(57) **Zusammenfassung**

Eine Dispersion einer hydrophober Kieselsäure im Wasser wird gefördert, indem man die Dispersion mittels einer Walkbewegung weitertransportiert.

## Beschreibung

Die Erfindung betrifft ein Verfahren zum Fördern einer Dispersion einer hydrophober Kieselsäure in Wasser.

Aus der älteren Anmeldung vom 03. Mai 2004 mit dem Anmelde-Aktenzeichen PCT/EP 2005/004069 (040133 FH) ist eine Dispersion mit insektizider Wirkung bekannt.

Diese Dispersion enthält neben Wasser 0,5 bis 20 Gew.-% hydrophober Kieselsäure, 0,01 bis 10 Gew.-% eines gelierenden beziehungsweise die Viskosität erhöhenden Additivs, 0,1 bis 1 Gew.-% eines Konservierungsmittels, 0 bis 1 Gew.-% einer oberflächenaktivierenden Substanz.

Die bekannte Dispersion hat eine insektizide Wirkung und kann daher beispielsweise gegen Milben, Käfer, Motten, Läusen etc. eingesetzt werden.

Zur Anwendung der Dispersion als insektizides Mittel ist es notwendig diese Dispersion in angemessener Form zu verteilen.

Es bestand nun die Aufgabe ein Verfahren zum Ausbringen und Fördern einer Dispersion zufinden, mit der die insektizid wirkende Dispersion derart ausgebracht werden kann, daß ein Maximum an Wirksamkeit erzielt wird.

Das technische System zum Ausbringen und Fördern der Dispersion sollte weiterhin in Bezug auf die Versorgung mit Energien (z.B. Elektrizität, Druckluft etc.) unabhängig, d.h. autark sein.

Die maximalen geometrischen Abmessungen des oben genannten technischen Systems sind durch die Arbeitsumgebung limitiert.

Unabhängig von der Anzahl der verwendeten Düsen (z.B. 1, 2 .... 10 Düsen) ist ein gleichmäßiges Sprühbild bei konstantem Volumenstrom pro verwendeter Düse zu gewährleisten.

Gegenstand der Erfindung ist ein Verfahren zum Fördern und Ausbringen einer wässrigen Dispersion einer hydrophoben Kieselsäure, welches dadurch gekennzeichnet ist, daß man die Dispersion in einer Leitung führt und innerhalb der Leitung die Dispersion mittels einer Walkbewegung weitertransportiert.

Erfindungsgemäß kann die Walkbewegung mit einer Vorrichtung aus der Gruppe Schlauchpumpe, Schlauchschneckenpumpe, Peristaltikpumpe beziehungsweise Rotationsverdrängerpumpe durchgeführt werden.

Die Peristaltikpumpe oder Rotationsverdrängerpumpe ist bekannt aus DE 197 13 689 und DE 197 17 452.

Mit dem erfindungsgemäßen Verfahren ist es möglich die folgenden, gesetzten Anforderungen zu erfüllen!

Applikation der Dispersion auf Flächen und Stäben, wobei mittels der verwendeten Düsen ein gleichmäßiges Sprühbild erzeugt wird.

Die ausgebrachte Dispersion bewahrt ihre insektizide Wirksamkeit und weist eine ausreichende Anhaftung an den Applikationsflächen auf.

Die eingangs beschriebenen Anforderungen an die Erfindung werden durch die Erfindung erfüllt.

### Beispiele

Zur Ausbringung der Dispersion stehen verschiedene Pumpen zur Auswahl, welche nach dem Peristaltikprinzip oder Verdrängungsprinzip arbeiten.

Ein Hauptkriterium bei der Auswahl ist eine besonders schonende Fördertechnologie, damit die Dispersion nicht ihre insektizide Wirkung verliert.

Schlauchpumpen bekannt aus
Bartholome E, Ullmanns Enzyklopädie der technischen Chemie, Verlag Chemie, 1973
Vauck, W., Müller, H., Grundoperationen chemischer Verfahrenstechnik, Deutscher Verlag für Grundstoffindustrie, 2000.

Bei Schlauchpumpen liegt ein elastischer Schlauch in einem nach innen offenen Krümmergehäuse. Umlaufende Rollen pressen den Schlauch zusammen und teilen ihn dadurch in einen Saug- und Druckraum. Der maximale Betriebsdruck von Schlauchpumpen liegt bei 10 bar.

Da das Fördermedium nur Kontakt mit dem Förderschlauch hat, besteht keine Korrosionsgefahr. Darüber hinaus sind Schlauchpumpen äußerst wartungsarm.

Aus denselben Dokumenten sind weiterhin Schlauchschneckenpumpen bekannt.

Im Gegensatz zu den herkömmlichen Schlauchpumpen befinden sich hierbei in einer Schlauchschneckenpumpe mehrere Schläuche. Diese liegen achsparallel zum mittigen Excenterschneckenrotor und werden gleichzeitig abgedrückt. Der maximale Betriebsdruck liegt bei 6 bar.

Da das Fördermedium nur Kontakt mit dem Förderschlauch hat, besteht auch bei diesen Pumpen keine Korrosionsgefahr. Darüber hinaus ist die Schlauchpumpe äußert wartungsarm. Im Vergleich zur einfachen Schlauchpumpe ist die Pulsation bei Schlauchschneckenpumpen deutlich abgeschwächt.

Peristaltikpumpe Inomat M8 der Firma INOTEC GmbH bekannt aus
Inotec GmbH, Bedienungsanleitung Inomat M8, Inotec GmbH, 2005
Kammerer, R., Offenlegungsschrift DE 197 17 452 A1, Bundesdruckerei, 1988
Kammerer, R., Offenlegungsschrift DE 197 13 689 C2, Bundesdruckerei, 1999

Ähnlich dem Prinzip der Schlauchpumpe wird auch bei der Peristaltikpumpe der Firma Inotec das Fördermedium durch eine Walkbewegung gefördert. Allerdings befindet sich das Fördermedium nicht in einem Schlauch, sondern zwischen einer flexiblen und einer festen Platte. Die flexible Platte wird über einzelne bewegliche Druckübertragungsglieder ausgelenkt, welche wiederum von einem konzentrisch um die Achse laufenden Rotor bewegt werden. Hierdurch wird der Pumpkanal in einen Saug- und Druckraum getrennt. Der maximale Betriebsdruck liegt bei 15 bar.

Die Pumpe ist pulsationsarm. Die erreichte insektizide Wirkung entspricht den Anforderungen. Durch den einfachen Aufbau der Pumpe kann diese sehr einfach und schnell gewartet und gereinigt werden. Das Fördermedium kommt nur in Kontakt mit den beiden Kunststoffplatten, welche unempfindlich gegenüber der Dispersion sind.

Weitere bekannte Förderprinzipien entsprechen nicht den eingangs formulierten Anforderungen. Exemplarisch seien hier einige Pumpentypen genannt.

Kolbenpumpen (bekannt aus Vauck, W., Müller, H., Grundoperationen chemischer Verfahrenstechnik, Deutscher Verlag für Grundstoffindustrie, 2000)

Bei der Kolbenpumpe wird das Fördermedium durch einen Kolben gefördert. Die Hubbewegung des Kolbens als oszillierender Verdrängungskörper in einem Zylinder saugt bei speziellen Bauarten das Medium pulsationsarm zuerst in diesen und drückt es anschließend aus diesem heraus. Dabei schließen abwechselnd Druck- und Saugventile den Pumpenraum ab. Der Volumenstrom wird über die Baugröße der eingesetzten Düsen und den eingestellten Betriebsdruck eingestellt. Der maximale Betriebsdruck zur Zerstäubung liegt bei bis zu 230 bar.

Die erreichten Mortalitätswerte an Milben entsprechen nachteiligerweise nicht den Anforderungen, weil durch die mechanische Beanspruchung die Dispersion zerstört wird. Unerwünschter Verschleiß der mit der Dispersion in Kontakt kommenden Komponenten, wie z. B. Kolben, Zylinder und vor allem Druck- und Saugventile führen zum Versagen der betreffenden Pumpen bei Verwendung des Produkts.

Kolbendoppelmembranpumpen mit elektrischem Antrieb (bekannt aus Vauck, W., Müller, H., Grundoperationen chemischer Verfahrenstechnik, Deutscher Verlag für Grundstoffindustrie, 2000)

Im Gegensatz zu Kolbenpumpen bildet bei Membranpumpen eine Membran den Verdrängungskörper. Die Membran wird durch direkte Kopplung mit dem Antriebsgestänge in Bewegung versetzt. Dabei trennt die Membran den Arbeitsraum vollständig vom Antrieb ab.

Im durch die Membran abgetrennten Pumpraum kommt es zu keiner Korrosion/Abrassion.

Die erreichte insektizide Wirkung an Milben entsprechen nachteiligerweise nicht den Anforderungen. Unerwünschter Verschleiß der mit der Dispersion in Kontakt kommenden Komponenten, wie z. B. Druck- uns Saugventile tritt ein. Durch den ständigen Bypassstrom in der Pumpe wird die Dispersion stark beansprucht, wodurch deren insektizide Wirksamkeit reduziert wird. Der komplizierte Aufbau der Pumpe erschwert die Wartung/Reinigung der Pumpe.

## Patentansprüche

1. Verfahren zum Fördern und Ausbringen einer wässrigen Dispersion einer hydrophoben Kieselsäure, **dadurch gekennzeichnet, daß** man die Dispersion in einer Leitung führt und innerhalb der Leitung die Dispersion mittels einer Walkbewegung weitertransportiert.

2. Verfahren und Ansprüche, **dadurch gekennzeichnet, daß** man die Walkbewegung mit einer Vorrichtung aus der Gruppe Schlauchpumpen, Schlauchschneckenpumpen, Peristaltikpumpen beziehungsweise Rotationsverdrängungspumpe durchführt.
